# EUROPEAN PATENT SPECIFICATION

(11) **EP 2 105 842 B1**
(45) Date of publication and mention of the grant of the patent: **02.11.2011**
(21) Application number: 08290287.5
(22) Date of filing: 27.03.2008
(51) Int. Cl.: G06F 13/40

(54) **Method for rmotely managing an ATCA System**
Verfahren zur Fernverwaltung eines ATCA-Systems
Procédé pour la gestion distante d'un système ATCA

(43) Date of publication of application: 30.09.2009
(73) Proprietor: Alcatel Lucent, 75008 Paris (FR)
(72) Inventor: Lantoine, Eric c/o ALCATEL LUCENT, 75008 Paris (FR); Le Vot, Yann c/o ALCATEL LUCENT, 75008 Paris (FR)
(74) Representative: El Manouni, Josiane

(56) References cited:
- EP-A- 1 376 375
- US-A1- 2007 061 433
- US-A1- 2007 104 091
- US-A1- 2007 153 803

## Description

### FIELD OF THE INVENTION

The invention relates to the field of computer and communication network equipment, and more precisely to the software (SW) control of such equipment, within the scope of ATCA (Advanced Telecommunication Computing Architecture).

### BACKGROUND OF THE INVENTION

ATCA, or AdvancedTCA, is a new standard specified by the PICMG (PCI Industrial Computer Manufacturers Group), which includes the major computer manufacturing companies. ATCA aims at defining a new generation of communication equipment having, with respect of legacy equipment, better performance and compactness in order to comply with the needs of the next generation networks (NGN), i.e. higher processing and transfer capabilities due to the merging of voice and data over IP (Internet Protocol).

ATCA's main features are defined in *PICMG 3.0 Specification Short Form* (January 2103). ATCA is modular and provides a shelf in which a series of blade cards or boards can be racked and interconnected by a backplane including high speed point-to-point links instead of an ordinary bus connection. Each ATCA board is designed to fit the shelf and has standardized dimensions. The board has a rear portion including three connecting zones, i.e. zone 1, zone 2 and zone 3, respectively providing the board with the following functions: 48VDC power supply, interconnection with other boards and connection with an RTM (Rear Transition Module).

The shelf includes an electronic device, called the shelf manager, designed to monitor, control, and assure proper operation of ATCA boards and other shelf components such as fans.

The modular design of ATCA makes it possible to build a system having functionalities dispatched between several boards. In the telecommunication field for example, it is possible to build highly efficient and flexible routers, e.g. for mobile network base stations (BS). An ATCA communication system may include one or more node boards supporting hardware for receiving, processing and transmitting signals (such as wireless signals), one or more hub boards for handling interconnections between boards implemented within the ATCA shelf, and one or more control board for managing the hardware of the node boards. One example of an ATCA implementation is proposed in Aoki et al, ATCA-Based Open-Architecture Router Prototype, IEICE Trans. Commun. Vol.E89-B, n°5, May 2106*.*

Management of ATCA systems relies upon the IPMI (Intelligent Platform Management Interface) protocol, which is a messaging protocol providing inventory, monitoring, logging and recovery control functions independent of the main processors, BIOS, and operating systems (OS) of the managed system. IPMI is run on a Baseboard Management Controller (BMC), which manages the interface between the system management software (SW) and hardware (HW). Further details are available in *IPMI Specification v2.0, Document Revision 1.0, February 2104.*

As most system administrators need distant access to the managed systems, IPMI is used in remote software interaction. Serial over LAN (SOL) is a specification of packet formats and protocols for transmitting serial data over LAN (Local Area Network) using IPMI over LAN packets. SOL is used for implementing a virtual remote serial client terminal for enabling remote software interaction with the system. SOL is presented in *IPMI Specification v2.0,* and further discussed in *Hulegaard et al, IPMI: At the Core of AdvancedTCA, OSA Technologies, December 2104.*

In practice, the client terminal is connected (via the LAN) to the control board of an ATCA system through a hub board, using any suitable IP-capable transport link (such as Ethernet).

In order to further increase compactness of the ATCA architecture, several computer manufacturers have proposed to combine the control function and the hub function on the same ATCA blade board, which they therefore call a combo board. In practice, the combo board is both a control board, for it includes an embedded central processing unit (CPU) for the management of the node boards (e.g. through an IPMI BMC at low-level for hardware management purposes), and a hub board for it further includes an embedded hub unit.

Such a combo board has proved not to be quite satisfactory as far as remote management is concerned. More specifically, as on combo boards the CPU and the hub unit generally share a same hardware initialization/reset function, the hub unit inevitably achieves initialization/reset after the whole system (and not only the CPU of the combo board) has started booting. As the remote terminal is connected to the CPU (via SOL) through the hub, it is not capable of repatriating early boot traces from the CPU. As a result, only partial management of the system is made possible.

It is therefore an object of the invention to provide a solution for fully managing an ATCA system through a combo control board.

### SUMMARY OF THE INVENTION

The invention provides, according to one aspect, a method for remotely managing an ATCA system, said system comprising a combo ATCA control board including an embedded central processing unit (CPU) and an embedded hub unit linked to the CPU through a first in and out (I/O) port provided on the CPU, and one or more functional ATCA node boards connected to the control board through said hub unit, said method comprising the following steps:
- accessing the CPU by means of a serial over LAN (SOL) interface implemented on a remote client terminal connected to the CPU through a second in and out (I/O) port provided on the CPU,
- accessing said one or more ATCA node board(s) through the CPU, via the hub unit, by means of a link within the CPU between the I/O ports.

According to another aspect of the invention, there is provided a combo ATCA control board including an embedded central processing unit (CPU) and an embedded hub unit linked to the CPU through a first in and out (I/O) port provided on the CPU, said CPU including a second in and out (I/O) port connected to an external 1/O port on the combo ATCA control board for linking the CPU to a remote client terminal via the external I/O port and a serial over LAN (SOL) interface implemented in the remote client terminal, said combo ATCA control board being **characterized in that** the CPU comprises a link between the I/O ports.

According to one further aspect of the invention, there is provided an ATCA system including a shelf, at least one functional ATCA node board mounted therein, and a combo ATCA control board as disclosed hereinbefore, wherein the or each of the one or more node board(s) is connected to the combo ATCA control board through the hub unit thereof.

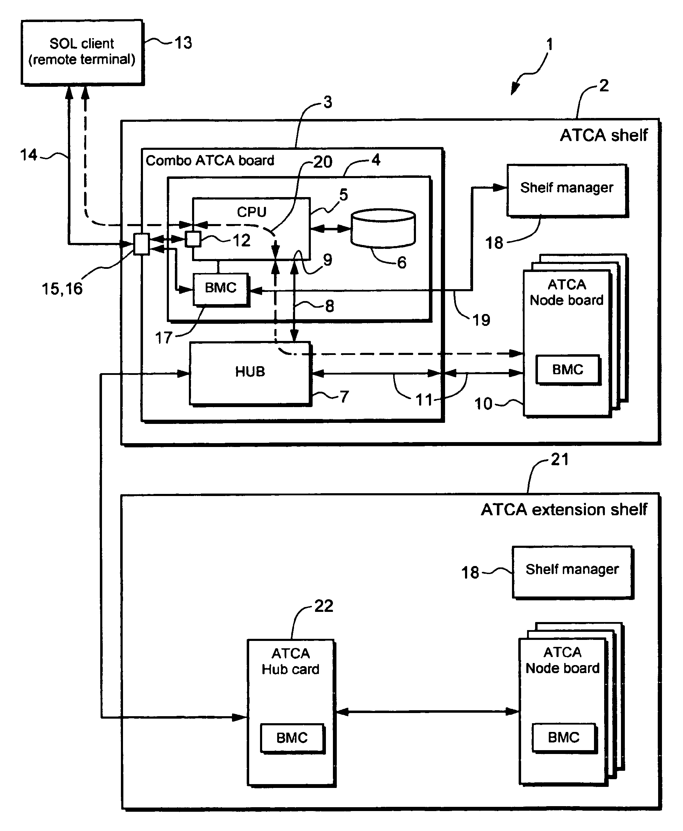

### BRIEF DESCRIPTION OF THE DRAWING

Various aspects of exemplary embodiments of the invention will become apparent from the detailed description of preferred embodiments, considered in conjunction with the accompanying drawing, which is a simplified block diagram illustrating an ATCA system, combo board and management method according to the invention.

### DESCRIPTION OF ILLUSTRATIVE EMBODIMENTS

Turning now to the drawing, there is shown an ATCA system **1** including a main ATCA shelf **2**, in which several ATCA boards are inserted, i.e.:
- a combo ATCA control board **3** provided with an embedded control unit **4** including a central processing unit (CPU) **5** and a memory **6** connected thereto, and an embedded hub unit **7** linked to the CPU **5** through a physical link **8** such as an Ethernet connection attached to an internal I/O port **9** (e.g. an Ethernet port) of the CPU **5**,
- one ore more functional ATCA node boards **10** connected to the combo control board **3** through the hub unit **7,** by means of physical links **11** such as Ethernet connections.

The CPU **5** includes an external in and out (I/O) port **12**, such as an Ethernet port, to which a remote client terminal **13** such as a laptop computer can connect through a Local Area Network (LAN) **14** for accessing the CPU **5** by means of a serial over LAN (SOL) interface implemented on the client terminal **13**. More precisely, connection of the remote client terminal **13** to the external I/O port **9** of the CPU **5** is achieved via an I/O port **15** (such as an Ethernet port) of the combo control board **3**, accessible on the front edge thereof, to which the external I/O port **12** of the CPU **5** is connected through a network controller **16**, such as an Ethernet controller.

The control unit **4** is also equipped with a baseboard management controller (BMC) **17** connected to the CPU **5** and providing managing functions over the IPMI protocol. The BMC **17** is connected to a shelf manager unit **18** of the shelf 1 through an intelligent platform management bus (IPMB-0) **19**. The BMC is also connected to the I/O port **15** through the network controller **16**, thereby bypassing the CPU **5** and allowing direct access to the BMC **17** from the SOL interface of the client terminal **13** as long as the CPU **5** is not available, e.g. during initialization/reset.

The combo ATCA control board **3** provides managing functions of the ATCA system **1** at different levels, i.e.:
- managing of high level applicative functions of the ATCA system **1,** e.g.:
   - access node, such as (in mobile and/or fixed networks) a Base Transceiver Station (BTS/NodeB), a Base Station Controller (BSC), a Multi-BSC Fast Packet Server (MFS), a media gateway (MGW), a media gateway controller (MGC), a signaling gateway (SGW), etc.,
   - core-network node, such as a Mobile Switching Center (MSC), a Home Location Register (HLR), etc.,
   - contact center (such as a Call server),
   - billing center (billing server),
   - any Java server;
- managing of intermediate level functions of the ATCA system **1,** i.e. the control of internal links (such as the internal Ethernet links) and corresponding security, through a middleware layer;
- managing of low-level functions of the ATCA system **1**, through a hardware management layer controlled by the shelf manager unit **18** via baseboard or module management controllers (BMC/MMC) of each hardware element of the ATCA system **1**.

The skilled person shall understand that the preceding examples are provided to illustrate a non-limitative and non exhaustive list, and that many other applications may also be considered.

As soon as it becomes available (i.e. once initialization is over), the CPU **5** is accessed by the SOL interface of the client terminal **13**. The CPU **5** is implemented with a logical bridge **20** to link the external I/O port **12** to the internal I/O port **9**, and therefore to the hub unit 7, thereby enabling access from the SOL interface to the ATCA node boards **10** through the CPU **5** via the hub unit **7.** Accordingly, the ATCA node boards **10** can be managed from the client terminal 13. In order to allow interaction between the SOL interface and the CPU **5**, the CPU **5** is implemented with IMPI over IP (RMPC+) capabilities.

It shall be noted that each node board **10** is intended for a specific functionality and is provided with suitable corresponding hardware. The functionality may include telecommunication signal reception, processing and/or transmission. Functionalities of the node boards **10** are not part of the present invention, so that any desirable functionality may be implemented without getting out of the scope of the invention.

As depicted on the drawing, an ATCA extension shelf **21** may be added to the ATCA main shelf **2**, in order to implement more node boards **10**. In the extension shelf **21** are implemented one or more node boards **10** connected, through an ATCA hub board **22**, to the hub unit **7** of the combo ATCA control board **3** of the main shelf **2**.

Management of the ATCA system **1** is processed as follows.

First, at combo control board **3** start-up, the remote SOL interface on the client terminal **13** opens a SOL session with the control unit **4**. Before the CPU **5** is initialized, interaction is achieved with the BMC **17**, and boot traces retrieved by the BMC **17** are then automatically redirected to the SOL interface. The SOL interface also accesses the shelf manager **18** via the BMC **17**, whereby the IP address of the client terminal **13** is delivered by the shelf manager **18** to the hardware elements (e.g. the node boards **10**) of the ATCA system **1**, as soon as these hardware elements initialize.

Secondly, once the boot execution is done, i.e. after the CPU **5** is initialized, ending up with running OS, the logical bridge **20** between the external I/O port **12** attached to the CPU **5** and the internal I/O port **9** connecting the CPU **5** to the hub unit **7** is performed, using e.g. IP routing functions offered by modern kernels such as Linux. It shall be noted that the hub unit **7** embedded within the combo control board **3** is also configured during the boot execution step.

It shall also be noted that early boot traces retrieved by the BMC **17** from the basic input/output system associated with the CPU **5** are also redirected to the SOL interface.

Finally, any node board **10** in the ATCA system **1** (single or multi-shelves, as depicted on the drawing) and connected to the hub unit **7** can be accessed through SOL by the client terminal **13**, through the CPU **5** and via the hub unit **7**.

Accordingly, full management of the ATCA system **1** is allowed, even during initialization of the CPU **5** and hub unit **7**.

## Claims

1. Method for remotely managing an ATCA system (**1**), said system (**1**) comprising a combo ATCA control board (**3**) including an embedded central processing unit (CPU) (**5**) and an embedded hub unit (**7**) linked to the CPU (**5**) through a first in and out (I/O) port (**9**) provided on the CPU (**5**), and one or more functional ATCA node boards (**10**) connected to the control board (**3**) through said hub unit (**7**), said method being **characterized by** the steps of:
- accessing the CPU (**5**) by means of a serial over LAN (SOL) interface implemented on a remote client terminal (**13**) connected to the CPU (**5**) through a second in and out (I/O) port (**12**) provided on the CPU (**5**),
- accessing said one or more ATCA node board(s) (**10**) through the CPU (**5**), via the hub unit (**7**), by means of a link (**20**) within the CPU (5) between the I/O ports (**9**, **12**).

2. Method according to claim 1, wherein the access to the one or more ATCA node boards (**10**) is achieved by means of a logical bridge (**20**) within the CPU (**5**) between the first and second I/O ports (**9, 12**).

3. Method according to claim 1 or 2, including a step of, prior to the step of accessing the CPU (**5**), accessing, from the remote client terminal (13), through the SOL interface, a baseboard management controller (BMC) (**17**) connected to the CPU (**5**).

4. Method according to claim 3, wherein the step of accessing the BMC (**17**) is done before the CPU (**5**) is initialized, and wherein the step of accessing the CPU (**5**) is done after the CPU (**5**) is initialized.

5. Combo ATCA control board (**3**) including an embedded central processing unit (CPU) (**5**) and an embedded hub unit (**7**) linked to the CPU (**5**) through a first in and out (I/O) port (**9**) provided on the CPU (**5**), said CPU (**5**) including a second in and out (I/O) port (**12**) connected to an external I/O port (**15**) on the combo ATCA control board (3) for linking the CPU (**5**) to a remote client terminal (13) via the external I/O port (**15**) and a serial over LAN (SOL) interface implemented in the remote client terminal (13), said combo ATCA control board (**3**) being **characterized in that** the CPU comprises a link between the I/O ports (**9**, **12**).

6. Combo ATCA control board (**3**) according to claim 5, wherein the link between the I/O ports (**9**, **12**) is via a logical bridge within the CPU (**5**).

7. Combo ATCA control board (**3**) according to claim 5 or 6, further including a baseboard management controller (BMC) (**17**) connected to the CPU (5).

8. Combo ATCA control board (**3**) according to claim 7, wherein the BMC (**17**) is connected to said external I/O port (**15**) through a link bypassing the CPU (**5**).

9. ATCA system (**1**) including a shelf (**2**), at least one functional ATCA node board (**10**) mounted therein, and a combo ATCA control board (**3**) according to any of claims 5-8, wherein the or each of the one or more node boards (**10**) is connected to said combo ATCA control board (**3**) through the hub unit (**7**).

## Patentansprüche

1. Verfahren zum entfernten Verwalten eines ATCA-Systems (1), wobei das besagte System (1) eine ATCA-Combo-Steuerplatine (3) mit einer eingebetteten Zentraleinheit (CPU) (5) und einer eingebetteten Hub-Einheit (7), welche über einen an der CPU (5) bereitgestellten ersten Ein- und Ausgangs-Port (E/A) (9) mit der CPU (5) verbunden ist, und ein oder mehrere operative ATCA-Knotenplatinen (10), welche über die besagte Hub-Einheit (7) an die Steuerplatine (3) angeschlossen ist/sind, umfasst, wobei das besagte Verfahren durch die folgenden Schritte **gekennzeichnet** ist:
- Zugreifen auf die CPU (5) anhand einer Serial-over-LAN (SOL)-Schnittstelle, welche auf einem entfernten Client-Endgerät (13), das über einen auf der CPU (5) bereitgestellten zweiten Ein- und Ausgangs-Port (E/A) (12) an die CPU (5) angeschlossen ist, implementiert wird,
- Zugreifen auf die eine oder mehrere ATCA-Knotenplatine(n) (10) über die CPU (5), über die Hub-Einheit (7), anhand eines Links (20) innerhalb der CPU (5) zwischen den E/A-Ports (9, 12).

2. Verfahren nach Anspruch 1, wobei der Zugriff auf die eine oder mehrere ATCA-Knotenplatine(n) (10) mittels einer logischen Brücke (20) innerhalb der CPU (5) zwischen den ersten und zweiten E/A-Ports (9, 12) erfolgt.

3. Verfahren nach Anspruch 1 oder 2, umfassend einen Schritt, vor dem Schritt des Zugreifens auf die CPU (5), des Zugreifens, von dem entfernten Client-Endgerät (13) über die SOL-Schnittstelle, auf einen an die CPU (5) angeschlossenen Baseboard Management Controller (BMC) (17).

4. Verfahren nach Anspruch 3, wobei der Schritt des Zugreifens auf den BMC (17) vor der Initialisierung der CPU (5) erfolgt, und wobei der Schritt des Zugreifens auf die CPU (5) nach der Initialisierung der CPU (5) erfolgt.

5. ATCA-Combo-Steuerplatine (3) mit einer eingebetteten Zentraleinheit (CPU) (5) und einer eingebetteten Hub-Einheit (7), welche über einen auf der CPU (5) bereitgestellten ersten Ein- und Ausgangsport (E/A) (9) mit der CPU (5) verbunden ist, wobei die besagte CPU (5) einen zweiten Ein- und Ausgangsport (E/A) (12) umfasst, welcher an einen externen E/A-Port (15) auf der ATCA-Combo-Steuerplatine (3) angeschlossen ist, um die CPU (5) über den externen E/A-Port (15) und eine in dem entfernten Client-Endgerät (13) implementierte Serial-over-LAN (SOL)-Schnittstelle mit einem entfernten Client-Endgerät (13) zu verbinden, wobei die besagte ATCA-Combo-Steuerplatine (3) **dadurch gekennzeichnet ist, dass** die CPU einen Link zwischen den E/A-Ports (9, 12) umfasst.

6. ATCA-Combo-Steuerplatine (3) nach Anspruch 5, wobei der Link zwischen den E/A-Ports (9, 12) über eine logische Brücke innerhalb der CPU (5) vorgesehen ist.

7. ATCA-Combo-Steuerplatine (3) nach Anspruch 5 oder 6, weiterhin umfassend einen an die CPU (5) angeschlossenen Baseboard Management Controller (BMC) (17).

8. ATCA-Combo-Steuerplatine (3) nach Anspruch 7, wobei der BMC (17) über einen die CPU (5) überbrückenden Link an den besagten externen E/A-Port (15) angeschlossen ist.

9. ATCA-System (1), umfassend einen Träger (2), mindestens eine darauf montierte operative ATCA-Knotenplatine (10) und eine ATCA-Combo-Steuerplatine (3) gemäß einem beliebigen der Ansprüche 5-8, wobei die oder eine jede der mehreren Knotenplatinen (10) über die Hub-Einheit (17) an die besagte ATCA-Combo-Steuerplatine (3) angeschlossen ist.

## Revendications

1. Procédé de gestion à distance d'un système ATCA (1), ledit système (1) comprenant une carte de commande d'ATCA combinée (3) incluant une unité centrale (UC) intégrée (5) et une unité concentrateur intégrée (7) reliée à l'UC (5) par le biais d'un premier port (9) d'entrée/sortie (E/S) présent sur l'UC (5), et une ou plusieurs cartes de noeud d'ATCA fonctionnelles (10) connectées à la carte de commande (3) par le biais de ladite unité concentrateur (7), ledit procédé étant **caractérisé par** les étapes suivantes :
- Accès à l'UC (5) au moyen d'une interface série sur LAN (SOL) mise en oeuvre sur un terminal client distant (13) connecté à l'UC (5) par le biais d'un deuxième port (12) d'entrée/sortie (E/S) présent sur l'UC (5),
- Accès auxdites une ou plusieurs cartes de noeud d'ATCA (10) à travers l'UC (5), par le biais de l'unité concentrateur (7), au moyen d'une liaison (20) à l'intérieur de l'UC (5) entre les ports d'E/S (9, 12).

2. Procédé selon la revendication 1, dans lequel l'accès à l'une ou aux plusieurs cartes de noeud d'ATCA (10) est réalisé au moyen d'une passerelle logique (20) à l'intérieur de l'UC (5) entre le premier et le deuxième ports d'E/S (9, 12).

3. Procédé selon la revendication 1 ou 2, incluant une étape, avant l'étape d'accès à l'UC (5), d'accès depuis le terminal client distant (13), à travers l'interface SOL, à un contrôleur de gestion de carte de base (BMC) (17) connecté à l'UC (5).

4. Procédé selon la revendication 3, dans lequel l'étape d'accès au BMC (17) est exécutée avant l'initialisation de l'UC (5) et dans lequel l'étape d'accès à l'UC (5) est exécutée après l'initialisation de l'UC (5).

5. Carte de commande d'ATCA combinée (3) comprenant une unité centrale (UC) intégrée (5) et une unité concentrateur intégrée (7) reliée à l'UC (5) par le biais d'un premier port (9) d'entrée/sortie (E/S) présent sur l'UC (5), ladite UC (5) incluant un premier port (12) d'entrée/sortie (E/S) connecté à un port d'E/S externe (15) de la carte de commande d'ATCA combinée (3) pour relier l'UC (5) à un terminal client distant (13) par le biais du port d'E/S externe (15) et une interface série sur LAN (SOL) mise en oeuvre dans le terminal client distant (13), ladite carte de commande d'ATCA combinée (3) étant **caractérisée en ce que** l'UC comprend une liaison entre les ports d'E/S (9, 12).

6. Carte de commande d'ATCA combinée (3) selon la revendication 5, la liaison entre les ports d'E/S (9, 12) étant réalisée par le biais d'une passerelle logique à l'intérieur de l'UC (5).

7. Carte de commande d'ATCA combinée (3) selon la revendication 5 ou 6, comprenant en outre un contrôleur de gestion de carte de base (BMC) (17) connecté à l'UC (5).

8. Carte de commande d'ATCA combinée (3) selon la revendication 7, le BMC (17) étant connecté audit port d'E/S externe (15) à travers une liaison qui contourne l'UC (5).

9. Système ATCA (1) comprenant une baie (2), au moins une carte de noeud d'ATCA fonctionnelle (10) montée dans celle-ci, et une carte de commande d'ATCA combinée (3) selon l'une quelconque des revendications 5-8, la ou chacune desdites une ou plusieurs cartes de noeud (10) étant connectée à ladite carte de commande d'ATCA combinée (3) à travers l'unité concentrateur (7).
